# EUROPEAN PATENT SPECIFICATION

(11) **EP 2 615 349 B1**
(45) Date of publication and mention of the grant of the patent: **01.11.2017**
(21) Application number: 12382487.2
(22) Date of filing: 10.12.2012
(51) Int. Cl.: F16L 37/22, F16L 37/23, F16L 37/40

(54) **Quick-connect fitting with safety system for pneumatic tubes**
Schnellverbindungsbefestigung mit Sicherheitssystem für Luftreifen
Raccord rapide avec système de sécurité pour tubes pneumatiques

(30) Priority: 15.12.2011 ES 201132021
(43) Date of publication of application: 17.07.2013
(73) Proprietor: Gregorio Casamian, Pedro, 50011 Zaragoza (ES)
(72) Inventor: Gregorio Casamian, Pedro, 50011 Zaragoza (ES)
(74) Representative: Carvajal y Urquijo, Isabel

(56) References cited:
- EP-A2- 1 304 522
- ES-A1- 2 303 413
- US-A- 4 366 945

## Description

### Object of the invention

The present invention relates to a quick-connect fitting with safety system for pneumatic tubes. The object of the invention is to provide a quick connector having a simpler structure than that of the connectors known, improving nozzle retention during the bleed phase.

### Background of the invention

Various quick connectors for tubes are known in the state of the art. Bläuenstein ES8100716 of 20/12/1978 discloses a quick connector having a system for retaining the nozzles during the bleed phase that includes a needle consisting of a small cylinder mounted transversally in such a manner that it penetrates through an inclined slot made in the wall of the connector body, a ball housed in a longitudinal slot in the wall of the connector, a spring that embraces the connector body, which is compressed between the base of a needle ring and the fitting connected to the compressed air source by an outer casing or lid slidable along the connector body and an snap ring that seals the assembly.

In order to enable air intake through the nozzle, said nozzle is pushed, the needle is inserted into the nozzle throat and the valve opens to allow the flow.

In order to stop the flow, the lid is pushed to the end of its path of travel, the lid pushes the needle which, in turn, pushes the needle ring, causing aperture thereof and releasing the nozzle, which regresses towards the operator until it is stopped by the ball that retains it, while the air supply to the nozzle is cut off on shutting off the valve. The tip of the nozzle is free to vent the air contained in the compressed air utilisation circuit and send the backflow air to the area surrounding the quick connector, while the bleed air collaborates in the retention of the lid in this venting phase.

The bleed air that collaborates in the venting phase is disclosed, inter alia, in the patents by Gromelle FR2120454A5 dated 31/12/1970, Klein EP0184799A3 dated 11/12/1984 and Heilmann US5.290.009 dated 22/10/1998.

In order to fully extract the nozzle, once the backflow air is bled off, the lid moves towards the operator and the internal structure allows sufficient cavities for the ball to overcome the nozzle flange in the direction of extraction thereof.

Document ES2303413 discloses a fitting engagement for pneumatic piping according to the preamble of claim 1, including a safety system. It has greater structural simplicity than conventional coupling fittings, using a smaller number of parts and thereby reducing manufacturing costs of the device. The cover has a mouth with an inner diameter slightly greater than the faces of the hexagon socket body, forming between them a simple outlet for controlled release of air from the supply line. The socket body also incorporates a pair of nozzles on its outer surface converging at one of its ends in holes, communicating thus the interior of the socket body with the chamber defined in said cap, leveling the pressures on either side of the needle ring and avoiding possible lashes during the disengagement of the hydraulic hose. The needle ring includes a pair of leaf springs that absorb clearances mounting arrangement, and the retainer ring is obtained in plastic material, being easily insertable into the cover.

### Description of the invention

The invention consists of a quick-connect fitting with safety system for pneumatic tubes in particular and, in general, for tubes that transfer pressurised fluids between a female element in the form of a sleeve or quick connector and a male element or nozzle suitable for coupling and remaining in the fluid intake position on introduction of the female element, having a valve disposed in the interior of the female element in the form of a sleeve which opens on coupling to allow passage of the air supply while the male element is in the intake position. When the air supply to the nozzle must be cut off, an outer ring of the quick connector called slide is moved in an axial direction; the nozzle is retained in the venting, bleed or backflow phase, while it simultaneously shuts off said valve, cutting off the passage of air supply and conveying the backflow air to the area surrounding the quick connector. Once the backflow air is bled off, the male element is accessed via a second movement of the slide ring in an axial direction, opposite that of the previous movement.

The nozzle consists of a kind of funnel in the form of a drill bit pin equipped with a baffle next to the intake part and, at the other end, with terminals known in the state of the art, such as threads, of barrel or other typed, being rotary or rigid.

The shape of the nozzle, both at the tip or intake part, baffle, flange, throat or main body may vary. Some of said shapes, by way of example, can be observed in Macey GB 384,891 dated 24/04/1932, having a throat, Scheiwer US2.135.221 dated 06/01/1936, having a throat and flange, or Eastman GB 473,221 dated 22/09/1936, having a very long throat, flange and cylindrical intake part. Also Fox et al US2,297,548 dated 22/09/1941, having a very long throat, flange and cylindrical intake part, and Scheiwer US2,327,611 dated 30/09/1941, having a throat, flange and cone-shaped part in the intake part, Corcoran US2,784,987 dated 03/02/1954, having a very long throat, flange and cylindrical part, Zajac US2,913,263 dated 05/07/1957, having a very long throat and cylindrical tip, Nyberg US2,919,935 dated 05/03/1956, having a very short throat and cylindrical tip, Shigeru JP52013127A dated 22/07/1975, having a very long throat and flange, and cylindrical tip. Each shape also comes in several sizes.

The nozzle may have a smooth drill bit; the drill bit may be equipped with a valve that opens when the nozzle is connected to the sleeve element and closes when it is disconnected; said valve may or may not incorporate a spring; this valve may be automatic, i.e. it opens on passage of air and closes on passage of backflow air; when closed, the valve is fully watertight in some cases and partially watertight in others. By way of example, Hoffman *et altres* DE 1 250 698 dated 21/09/1967, which opens on intake and is fully watertight, Dunn GB 2 249 610 dated 26/10/1990, which lacks a spring and has partial watertightness, and Gregorio ES1043607U dated 01/07/1999, having a spring only by way of a guide. The ISO 6150 standard details the dimensions of the nozzles but does not describe the size of the drill bit. US Mil Standard C-4109D details the dimensions, including the size of the drill bit and the desired materials.

The quick-connect fitting with safety system for pneumatic tubes is called quick connector or simply connector herein.

The exterior of the body or part of the quick connector that receives the nozzle is usually prism shaped, ranging from a circular to a quadrangular cross-section, as in Zajac US2,913,263 dated 05/07/1957.

The quick connector can receive several different nozzles, as in Hansen US2.092.116 dated 07/11/1935, two nozzles, Wade US5,167,398 of 08/02/1991, three nozzles, or Heilmann US6,131,961 dated 22/10/1998, five nozzles.

The quick connector is equipped with a valve that opens on connecting the nozzle and closes on disconnecting the nozzle. This valve is aided by a spring, integrated at times, or lacks the aid of a spring.

The different types of valves include:

| | |
|---|---|
| Zahuranec | US3,359,015 dated 14/06/1965, ball |
| Schmidt | US4,025,049 dated 16/09/1974, cone with flaps |
| Johnson | US3,387,062 dated 30/11/1975, disk |
| Morrison | AU646972 dated 19/09/1991, elongated bypass |

The quick-connect fitting with safety system for pneumatic tubes proposed by the invention, satisfactorily improves the following aspects:
a) on fluid intake, the ball process, for overcoming the flange and positioning itself in the nozzle throat,
b) guiding of the needle's movements and positions,
c) the air gap between the lid and the body,
d) guiding of the sliding lid,
e) the retention of the nozzle for venting,
f) on extraction of the connector nozzle, the ball process for overcoming the flange for releasing the nozzle.

To this end, as of the invention of Bläuenstein ES8100716 dated 20/12/1978, and particularly as of figure five, the new snap ring that replaces the former ring 162 includes, from the rear part of the spring 148, a flange in the front part thereof, followed by an apron that goes up to the part near the connection spring 120, said flange being housed in a recess made inside the lid, in such a manner that said flange prevents extraction of the lid once assembled. The snap ring has a very fine drill bit in order to act as ring seal.

The new lid 158 may be made of plastic or metal and has a smooth drill bit having a diameter slightly larger than the diameter of the casing of the sides of the rounded polygon of the connector body so as to create an air gap without losing the guiding system and incorporates a recess where the snap ring is housed.

The assembly between the lid and the snap ring is obtained by means of plastic deformation and is carried out when the rest of the parts are disposed and fitted. The lid and snap ring compose the slide.

The new needle ring acts as a ring seal and incorporates a projecting spring which, during the intake phase, has the mission of increasing the recess between the lid and the needle ring. Reference is made to the integrated projecting spring throughout the description, due to considering it advantageous as compared to a normal spring additional to the ring, i.e. instead of an integrated projecting spring, an additional spring. However, the quick-connect fitting described herein could function both with an integrated projecting spring and an additional spring, due to which both possibilities are envisaged.

During the bleed phase, when part of the backflow air that penetrates through the air gap created between the needle ring and the body reaches a type of pneumatic cylinder formed by the needle ring, the slide and the connector body which, due to the force of the air that forms in the cylinder, the slide moves in a direction opposite to that of the operator, on being the needle ring inserted and the slide is free to do so, the projecting spring yields, narrowing the opening between the lid and the needle ring and guiding the little ball along its path, by form rather than by force, to effectively stop the nozzle during the venting phase.

The projecting spring that emerges from the edge of the new needle ring creates a narrow opening which allows the ball to pass towards the throat of the nozzle during the intake phase.

The projecting spring that emerges from the edge of the new needle ring enables absorption of small axial yields due to manufacturing and assembly tolerances.

The needle ring incorporates a rectangular recess that guides the needle 146, the depth of which is greater than the diameter of the needle, facilitating the movement of the needle on eliminating the obstacle represented by the inner wall of the lid against the needle during the nozzle bleed phase. The recess limits the needle's path of travel, due to which shorter needles are used than would be required in the absence of said recess, allowing the lid to be smaller, thereby saving in material.

The pair of balls 166 retains the nozzle during the bleed phase without need for the spring 165 and its associated elements.

The venting of backflow air towards the exterior has been improved in this invention, on increasing the cross-section of the air gap without losing the guiding system.

### Description of the drawings

In order to complement the description being made of the object of the invention and in order to help better understand its distinguishing characteristics, the present specification is accompanied by a set of drawings forming an integral part thereof wherein, in an illustrative and non-limiting manner, the following have been represented:
Figure 1. Shows a longitudinal cross-section of the quick-connect fitting with safety system for pneumatic tubes of the invention, taken along the P-N plane defined in figure 2 and represented above the axis 4. The longitudinal cross-section defined by the P-M plane in figure 2 is represented below the axis 4 during the phase prior to fluid intake. The nozzle element is represented unconnected on the right-hand side.
Figure 2. Shows a view of the invention from the side of the nozzle element, which shows the retention and insertion means.
Figure 3. Shows the quick-connect fitting with safety system of the invention, according to figure 1, with the nozzle connected during the fluid intake phase.
Figure 4. Shows the quick-connect fitting with safety system of the invention, according to figure 1, with the nozzle retained.
Figure 5. Shows a front elevational view of the needle ring of the fitting of the invention.
Figure 6. Shows the quick-connect fitting of the invention, according to figure 1, with the nozzle retained upon completion of the bleed phase.

### Preferred embodiment of the invention

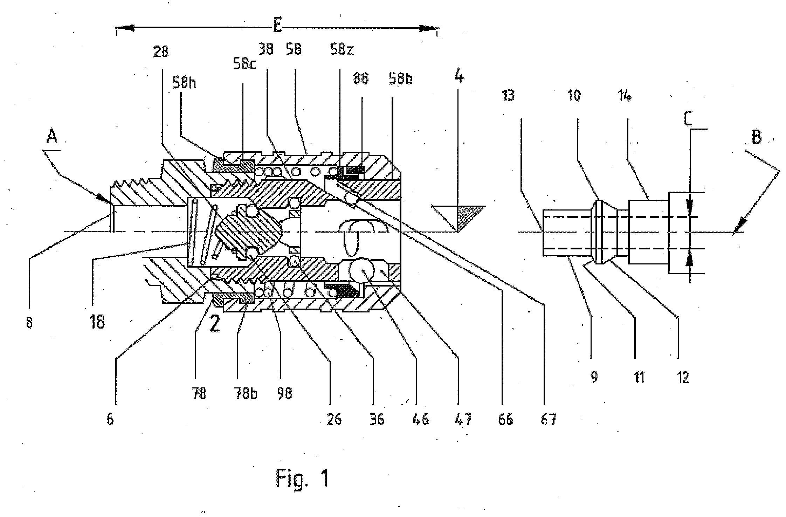

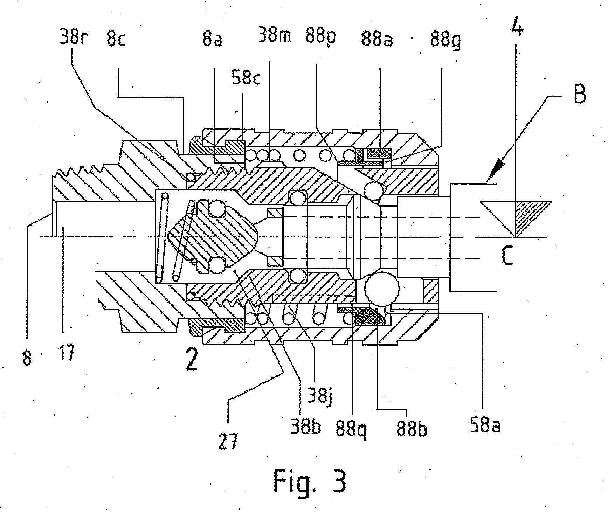

In light of the aforementioned figures, particularly FIGURE 1, it can be observed that the quick-connect fitting with safety system for pneumatic tubes, which comprises a female safety quick connector (E) destined for coupling to a male nozzle (B), wherein the female connector (E) consists of a joining part to the source (A), not represented herein, of the pressurised fluid or terminal coupling (8), a first spring (18), a valve (28), a first O-ring (26), a connector body (38), a ring seal (36), a second O-ring (6), a snap ring (78), a second spring (98), a needle ring (88), a needle (65, 66), a ball (45, 46) and a lid (58), the assembly (E) being destined for coupling to an air intake nozzle (B) that includes a conduit (C), as can be observed in FIGURE 3.

The needle ring (88) is elastic and incorporates at least one projecting spring (88a, 88a') that emerges from the edge thereof, which is in contact with the inner wall (58a) of the lid (58), creating an opening (88g). This projecting spring (88a, 88a') absorbs the axial yields during assembly. An ellipsoid-shaped cavity (88b, 88b') that constitutes an air gap (88q), guides the ball (45, 46) towards the throat (12) of the nozzle (B) when in operation, preventing the ball (45, 46) from falling out of the slot (47) when the nozzle (B) is extracted from the connector (E). There is also a needle guide (65, 66) composed of a four-cornered recess (88c), the depth of which is greater than the diameter of the needle (65, 66).

This projecting spring (88a, 88a') may be integrated in the needle ring (88), i.e. forming a part thereof, or may be an additional spring.

The second spring (98) is subject on one of its sides (98c) to the action of the projecting spring (88a, 88a'), indirectly transmitting its thrust through the slide (2), except when the nozzle (B) is in the bleed or extraction phase. This second spring (98) reaches the solid dimension without the apron (78f) of the snap ring (78) showing the end of the terminal coupling (8).

The slide (2) is formed by the snap ring (78) and the lid (58). It has a hardened drill bit at the nozzle (58b) and includes a middle part (58z) that forms a pneumatic cylinder that functions during the backflow phase and a recess (58c) disposed near an assembly chamfer (58h) that houses the flange (78b) of the snap ring (78). This solidary assembly called slide (2) serves to move the mechanism by means of axial movements.

The two components of the slide (2) are made of a plastic material having smooth sliding properties without wear from normal use, or of metal, or of one of the two possible combinations, plastic/metal or metal/plastic, which become deformed when assembled to seal the packet of elements that form the safety mechanism, recovering their original format once assembled.

Once the packet of elements that forms the safety mechanism is sealed, the slide (2) prevents the extraction of the lid (58) of the connector (E) due to the flange (78b) of the snap ring (78) inserted in the recess (58c).

The nozzle (B) (FIGURE 1) that draws in the air for the user through the front (13) thereof has a cylindrical rod part (9) followed by a truncated cone (11), a flange part (10) and a throat (12) on the edge, where the needle is inserted (65, 66) and the ball (46) retains the nozzle (B); it has a drill bit (C) that serves as an air channel; the flange and throat may adopt other shapes without affecting the essence of the invention.

The snap ring (78) assembled on the slide (2) in a solidary manner forms a ring seal on the cylindrical rod (8c) of the terminal coupling (8). It also has an apron (78f) which is clearly visible when the slide (2) is assembled. This slide (2) has auxiliary projections on the exterior in order to extract the nozzle (B) with ease.

The nozzle (B) represented in FIGURE 1 has the terminal part (17) at the end thereof, with a plurality of terminal options not represented herein.

The coupling part (8) is used as a means for joining the coupling to the pneumatic supply line. Internally, it consists of a female thread for joining to the body (38) followed by a watertight contact area for the second O-ring (6) and by a recess whereon the first spring (18) leans ending in a terminal part (17) (FIGURE 3).

Externally, it has a cylindrical rod (8c) on the female thread for joining to the connector body (38), followed by a part for resting the key when the connector is installed, that ends in the terminal part (17). The terminal part (17) has multiple options; here it has been represented with a male thread, but it could have been illustrated with any of the multiple existing options.

The valve (28), which is housed inside the connector body (38), may be supported by a first spring (18), has a first O-ring (26) that serves as a seal between the valve (28) and the wall (38b) of the connector body (38). The valve (28) allows the passage of air through the channel (27) when the nozzle (B) is in the intake position (FIGURE 3), which obliges the valve to regress (28).

The O-ring (36) forms a watertight seal between the cylindrical rod (9) or nozzle ring (B) and the inner wall of the connector body (38), when the nozzle (B) is inserted in the intake position (FIGURE 3).

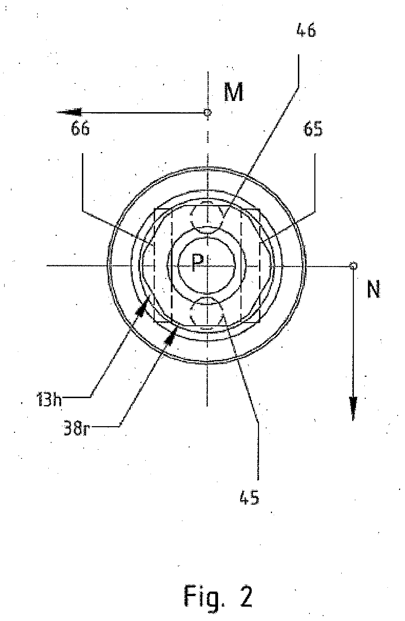

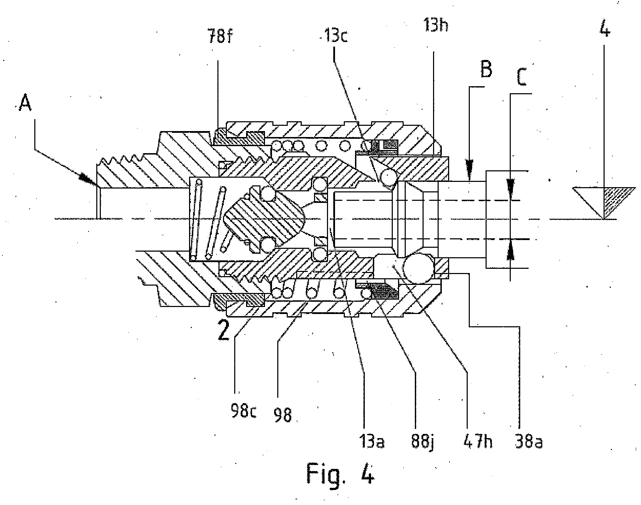

The connector body (38) is an hexagonal prismatic part having rounded or recessed corners (38r) (FIGURE 2), along the exterior from the tip to nearly the thread; between the thread and the rounded part there is a small mound (38m) that serves to guide the second spring (98), has a male thread for joining to the terminal coupling (8), a recess (38r) that serves as a support for the second O-ring (6), its wall incorporates two diametrically opposed ramps (67), having the appropriate skew for forming a profile connected to the throat (12) or flange of the nozzle (B), the needle (65, 66) and path of travel of the ramps (67) where along the needle moves (65, 66) and two diametrically opposed slanting orifices (47), having a U-shaped cross-section, located near (38a) (FIGURE 4) the mouth of the connector body (38), slanting orifices (47) wherethrough the ball (45, 46) protrudes, but having insufficient width to allow passage of the ball (45, 46) therethrough, two holes (38j) in the slanting orifices (47) for the inflow of air (FIGURE 3). Internally it has a drill bit extending from one end to the other, composed of a mouth to receive the nozzle (B), a recess to receive the ring seal (36), with the rear part disposed for housing the valve (28) and a cone-shaped wall where the first O-ring (26) forms a seal.

The snap ring (78) has a flange (78b) along the exterior at the front thereof, followed by an apron (78f); the interior thereof is a highly polished drill bit hole acting as guide and ring seal; the flange (78b) is housed in a recess (58c) made inside the lid (58). When the lid (58) and the snap ring (78) are assembled they form a solidary assembly called slide (2). The flange (78b) and recess (58c) are tightly assembled.

The lid (58) has a mouth (58b) in the form of a hardened smooth drill bit having an internal diameter slightly larger than the diameter of the casing of the sides of the hexagon of the connector body (38), as can be observed in FIGURE 2, in such a manner that said difference in diameters constitutes the air gap (13h) or escape route for the compressed air during the backflow phase, the mouth (58b) is followed by a larger drill bit having an area for centering (58z) the needle ring (88), with a recess (58c) disposed near the end opposite the mouth (58b), which serves to house the flange (78b), thanks to the assembly chamfer (58h).

The exterior of the lid (58) has recessed intermediate areas that facilitate the grip of the user's fingers to perform the required movements.

The lid (58) externally encompasses all the elements that compose the safety mechanism, except a part of the apron of the snap ring (78).

The second spring (98) that is mounted coaxially to the connector body (38), rests, on one hand, on the needle ring (88) in the recess (88p) and, on the other, on the terminal coupling (8) on the protuberance (8a) (FIGURE 3). When assembled, this second spring (98) has a longitudinal dimension of 175±15% of its solid length or length when all the spirals are joined. This dimension of the second spring (98) once assembled is nearly the same when the nozzle (B) is in the intake position or when the nozzle (B) is in the bleed position or when the nozzle (B) is absent.

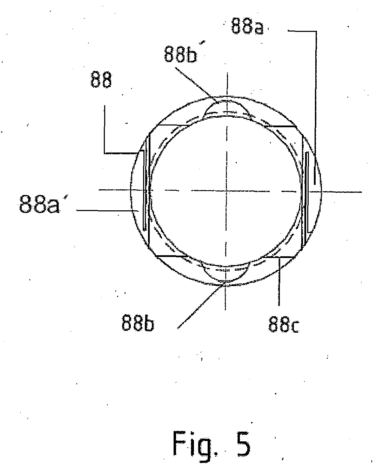

The needle ring (88) (FIGURE 5) is elastic, having depressions at the front thereof forming a four-cornered recess (88c), appropriate for housing the needle (65, 66). This recess (88c) serves to guide the needle (65, 66), preventing it from deviating from its path of travel; the depth of said recess (88c) is slightly greater than the diameter of the needle (65, 66) in order to facilitate its movement almost effortlessly. The needle ring (88) guides the needle (65, 66) at all times along the path of travel formed by the ramp (67) of the body (38) aided by the second spring (98).

The needle ring (88) incorporates a projecting spring (88a, 88a') that emerges from the edge thereof. The projecting spring (88a, 88a') is usually in contact with the inner wall (58a) of the lid (58), creating an opening (88g) (FIGURE 3).

The needle ring (88) forms a narrowing in the centering area (58z) that collaborates to form a pneumatic cylinder that functions during the backflow phase.

The projecting spring assembly (88a, 88a') absorbs the axial yields during assembly.

The needle ring (88) incorporates an ellipsoid-shaped cavity (88b, 88b') in order to guide the ball (45, 46), during the initial intake phase, towards the throat (12) of the nozzle (B); the cavity (88b, 88b') prevents the ball (45, 46) from falling out of the slot (47) when the connector nozzle is extracted.

An air gap (88q) is constituted between the connector body (38) and the needle ring (88) hole.

In order for the nozzle (B) to operate during the "intake phase", the operator introduces said nozzle (B) in the connector (E) by pushing the nozzle (B) towards the interior of the connector (E); the truncated cone (11) of the nozzle (B) pushes against the needle (65, 66), which in turn pushes against the needle ring (88), overcoming the tension in the compressed second spring (98), while the ball (45, 46) moves simultaneously along the exterior of the nozzle (B), the needle (65, 66) moves over the ramp (67), the ball (45, 46) reaches the top of the flange (10) and, when it overcomes the flange, the ball (45, 46) positions itself on the throat (12) of the nozzle (B) guided by the cavity (88b, 88b') and the narrow opening (88g) between the needle ring (88) and the slide (2) on acting the projecting spring (88a, 88a'), on the inner wall (58a) of the lid (58), increasing the opening (88g); the nozzle (B) moves forward, the needle (65, 66) opens pushed by the truncated cone (11) of the nozzle (B), the needle ring (88) is moved by the force exerted by the needle (65, 66) at the bottom of the recess (88c), overcoming the opposition offered by the second spring (98), the nozzle (B) continues moving forward towards the terminal coupling (8), until reaching a position in which the needle (65,66) reaches the top of the flange (10); once it has overcome the flange (10), the needle positions itself on the throat (12) of the nozzle (B); the nozzle (B) continues on its path of travel; the nozzle (B) was locked in place by the needle (65, 66) when the ball (45, 46) was already trapped within the slanting orifice (47) on the throat (12) of the nozzle (B) and the cavity (88b); the valve (28) has regressed, allowing the passage of air through the channel (27), the ring seal (36) forms the watertight seal between the cylindrical rod (9) and the inner wall of the connector body (38), moving the air from the terminal area (17) to the channel (C) (FIGURE 3).

In order to stop the service or release the nozzle (B) from the locking position formed in its throat (12) by the needle (65, 66), the slide is pushed (2) towards the terminal area (17) (FIGURE 3), entering the "bleed phase"; the needle ring (88) and the needle (65, 66) are pushed, which causes the aperture of this needle (65, 66) and causes the needle (65, 66) to rise over the ramp (67) until said needle (65, 66) overcomes the flange (10), releasing the nozzle (B) from its locked position; once the nozzle (B) is released from said locked position it regresses; before the needle (65, 66) overcomes the flange (10), the projecting spring (88a) has yielded, narrowing the opening (88g); the entrapment of the ball (45, 46) in the slanting orifices (47) with the cooperation of the slide (2) and the cavity (88b, 88b') of the needle ring (88); the ball (45, 46) is dragged by the nozzle (B) along the slanting orifice (47) until it butts against the area (38a), stopping and thereby retaining the nozzle (B); in this manner, the nozzle (B) is retained by form closure, as opposed to so-called "force closure", which would obviously require the action of a force element such as a spring.

When the nozzle (B) regresses the valve (28) closes, shutting off the air supply to the user; the front (13) of the flange (10) is separated from the ring seal (36) by a narrow opening (13a) and free to vent the air contained in the utilisation circuit.

The backflow of air of the line (C) is vented mostly through the opening (47h) in the connector body (38), towards the air gap (13h) or via the escape route of the compressed air, part of the air backflow of the narrow opening (13a) which reaches the interior of the pneumatic cylinder formed by the needle ring (88), the slide (2) and the connector body (38) through the port (13c) and the ramp (67). The auxiliary force created by the air in this cylinder, considering the component exercised in the direction of the terminal coupling (8) on the snap ring and by the snap ring on the lid moves the slide (2) in the direction of the terminal coupling (8), on being the needle ring (88) locked in position by the needle (65, 66).

Part of the backflow air that passes through the opening (47h) of the connector body (38), reaches the interior of the pneumatic cylinder formed by the needle ring (88), the slide (2) and the connector body (38) through the air gap (88q) and the hole (88j). The auxiliary force created by the air in this cylinder, considering the component exercised in the direction of the terminal coupling (8) on the snap ring and by the snap ring on the lid moves the slide (2) in the direction of the terminal coupling (8), on being the needle ring (88) locked in position by the needle (65, 66).

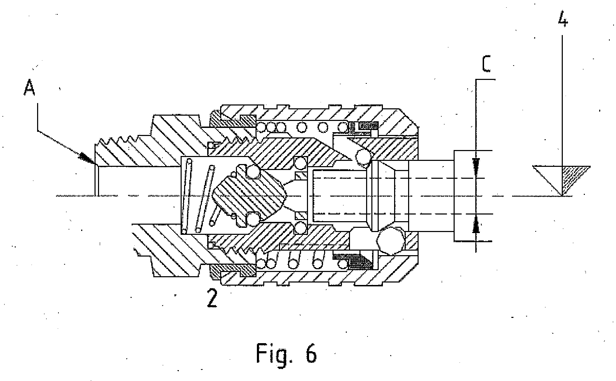

During this process, the needle ring (88) and needle (65, 66) occupy their position immediately, as it is not necessary to continue pushing the slide (2) for the escape of the backflow air to continue venting in a controlled manner; at the end of the venting, the slide (2) and the projecting spring (88a, 88a') return to their position, the ball (45, 46) remains in the slanting orifice (47) between the throat (12) of the nozzle (B) and the area (38a) (FIGURE 6).

In order to extract the nozzle (B) from the connector (E), entering the "release phase", the slide is pulled (2) towards the operator, through the snap ring (78) the second spring (98) is compressed. This allows the slanting orifice (47) of the connector body (38), the cavity (88b, 88b') of the needle ring (88) and the area (38a) of the lid (58) to have sufficient space for the ball (45, 46) to overcome the flange (10) when the nozzle (B) is extracted from the connector (E).

Lastly, on releasing the slide (2) the entire assembly returns to its initial position.

## Claims

1. Quick-connect fitting with safety system for pneumatic tubes comprising a female connector (E) destined for coupling to a nozzle (B), said female connector (E) comprising an element for joining to a source (A) a terminal coupling (8), a first spring (18), a valve (28), a first O-ring (26), a connector body (38), a ring seal (36), a snap ring (78), a second spring (98), a stop needle mechanism (65, 66), a ball (45, 46) and a lid (58), the fitting further comprises an elastic needle ring (88), which incorporates
- at least one projecting spring (88a, 88a') that emerges from an edge, which is in contact with the inner wall (58a) of the lid (58), creating an opening (88g);
- an ellipsoid-shaped cavity (88b, 88b') that constitutes an air gap (88q) that guides the ball (45,46) towards the throat (12) of the nozzle (B) when in operation;
- a needle (65, 66) guided by a four-cornered recess (88c), said recess (88c) having a depth greater than the diameter of the needle (65, 66), the fitting **characterised in that** the lid (58) and the snap ring (78) with apron (78f) form a slide (2) configured to move axially on the terminal coupling (8) and **in that** the fitting further comprises a second O-ring (6).

2. Quick-connect fitting with safety system for pneumatic tubes, according to claim 1, **characterised in that** the slide (2) formed by the snap ring (78) and the lid (58) has a smooth drill bit at a mouth (58b), and incorporates a middle part (58z) forming a pneumatic cylinder that functions during the backflow phase and a recess (58c) disposed near an assembly chamfer (58h) that houses the flange (78b) of the snap ring (78).

3. Quick-connect fitting with safety system for pneumatic tubes, according to any of claims 1-2, **characterised n that** the snap ring (78) solidarily assembled on the slide (2) forms, together with a cylindrical rod (8c), the terminal coupling (8).

4. Quick-connect fitting with safety system for pneumatic tubes, according to any of claims 1-3, **characterised in that** the apron (78f) of the snap ring (78) is visible when the slide (2) is assembled.

5. Quick-connect fitting with safety system for pneumatic tubes, according to any of claims 1-4, **characterised in that** the lid (58) has auxiliary protuberances on the exterior thereof for extracting the nozzle (B).

6. Quick-connect fitting with safety system for pneumatic tubes, according any of claims 1-5, **characterised in that** the second spring (98) is disposed around the connector body (38) with a longitudinal dimension upon assembly of 175 ± 15% of its solid length or length when all the spirals are joined.

7. Quick-connect fitting with safety system for pneumatic tubes, according to any of claims 1-6, **characterised in that** the second spring (98) is subject on one of its sides (98c) to the action of the projecting spring (88a, 88a'), transmitting its thrusting action indirectly through the slide (2), except when the nozzle (B) is in the venting or extraction phase.

8. Quick-connect fitting with safety system for pneumatic tubes, according to any of claims 1-7, **characterised in that** the second spring (98) reaches the solid dimension without the apron (78f) of the snap ring (78) showing the end of the terminal coupling (8).

9. Quick-connect fitting with safety system for pneumatic tubes, according to any of claims 1-8, **characterised in that** the needle (65, 66) subject to the second spring load by means of the needle ring (88) is guided along a slot (67) made at an angle to the longitudinal axis of the connector (4) in the connector body (38).

10. Quick-connect fitting with safety system for pneumatic tubes, according to any of claims 1-9, **characterised in that** during the intake phase the ball (45, 46) reaches the throat (12) of the nozzle (B), before the needle is inserted into the throat (12), being locked with freedom of movement within the holes (38j), by means of the slide (2) through the cavity (88b, 88b') and a slanting orifice (47).

11. Quick-connect fitting with safety system for pneumatic tubes, according to any of claims 1-10, **characterised in that** during the bleed phase, the front (13) of the nozzle (B) is separated from the ring seal (36) and from the valve (28) by a narrow opening (13a).

12. Quick-connect fitting with safety system for pneumatic tubes, according to claim 11, **characterised in that** during the bleed phase, part of the air that passes through the narrow opening (13a) reaches, through a port (13c) and ramps (67), the interior of the slide (2), exerting a force on the slide (2) in the direction of the terminal coupling (8), moving the slide (2) in the same direction.

13. Quick-connect fitting with safety system for pneumatic tubes, according to any of claims 11 or 12, **characterised in that** during the bleed phase, part of the backflow air in the channel (C) that passes through the narrow opening (13a) reaches the interior of the slide (2) through an opening (47h) and through nozzles (88j), exerting a force on the slide (2) in the direction of the terminal coupling (8) and moving the slide (2) in the same direction.

14. Quick-connect fitting with safety system for pneumatic tubes, according to any of claims 11 -13, **characterised in that** during the bleed phase, part of the backflow air in the channel (C) that passes through the narrow opening (13a) reaches, via the air gap (13h), the surrounding area.

15. Quick-connect fitting with safety system for pneumatic tubes, according to any of claims 1-14, **characterised in that** during the bleed phase, the ball (45, 46) is trapped in a slanting orifice (47), parallel to the axis (4), through the throat (12) of the nozzle (B), through a stop wall (38a), as a result of the force exerted by the backflow air on the side (13) of the nozzle (B) and by the slide (2).

16. Quick-connect fitting with safety system for pneumatic tubes, according to any of claims 1-15, **characterised in that** the needle-locking mechanism (65, 66) is a cylinder that moves over a ramp (67), having a slope angle formed by the profile attached to the throat (12) of the nozzle (B), the flange (10) and the needle (65, 66), taking the friction angle into account.

## Patentansprüche

1. Schnellkupplung mit Sicherheitssystem für Druckluftschläuche, umfassend eine Buchse (E), die zum Koppeln mit einer Düse (B) ausgelegt ist, wobei die Buchse (E) ein Element zum Verbinden mit einer Quelle (A), eine Endkupplung (8), eine erste Feder (18), ein Ventil (28), einen ersten O-Ring (26), einen Verbinderkörper (38), eine Ringdichtung (36), einen Schnappring (78), eine zweite Feder (98), einen Anschlagnadelmechanismus (65, 66), eine Kugel (45, 46) und einen Deckel (58) umfasst, wobei die Fassung ferner einen elastischen Nadelring (88) umfasst, der einschließt
- mindestens eine vorstehende Feder (88a, 88a'), die aus einem Rand austritt, der in Kontakt mit der inneren Wand (58a) des Deckels (58) steht, Erzeugen einer Öffnung (88g);
- einen ellipsenförmigen Hohlraum (88b, 88b'), der einen Luftspalt (88q) bildet, der die Kugel (45, 46) während des Betriebs in Richtung der Verengung (12) der Düse (B) führt;
- eine Nadel (65, 66), die durch eine viereckige Vertiefung (88c) geführt wird, wobei die Vertiefung (88c) eine Tiefe aufweist, die größer als der Durchmesser der Nadel (65, 66) ist, wobei die Fassung **dadurch gekennzeichnet ist, dass** der Deckel (58) und der Schnappring (78) mit Schürze (78f) einen Schieber (2) bilden, der konfiguriert ist, um sich axial auf der Anschlusskupplung (8) zu bewegen, und dadurch, dass die Fassung ferner einen zweiten O-Ring (6) umfasst.

2. Schnellkupplung mit Sicherheitssystem für Druckluftschläuche nach Anspruch 1, **dadurch gekennzeichnet, dass** der Schieber (2), der von dem Schnappring (78) und dem Deckel (58) gebildet wird, einen glatten Bohrer an einer Mündung (58b) aufweist und ein Mittelteil (58z), das einen pneumatischen Zylinder bildet, der während der Rückflussphase arbeitet, und eine Vertiefung (58c), die in Nähe einer Anordnungsabschrägung (58h) angeordnet ist, die den Flansch (78b) des Schnapprings (78) aufnimmt.

3. Schnellkupplung mit Sicherheitssystem für Druckluftschläuche nach einem der Ansprüche 1-2, **dadurch gekennzeichnet, dass** der Schnappring (78), der übereinstimmend auf dem Schieber (2) angeordnet ist, zusammen mit einer zylindrischen Stange (8c) die Anschlusskupplung (8) bildet.

4. Schnellkupplung mit Sicherheitssystem für Druckluftschläuche nach einem der Ansprüche 1-3, **dadurch gekennzeichnet, dass** die Schürze (78f) des Schnapprings (78) sichtbar ist, wenn der Schieber (2) montiert ist.

5. Schnellkupplung mit Sicherheitssystem für Druckluftschläuche nach einem der Ansprüche 1-4, **dadurch gekennzeichnet, dass** der Deckel (58) Hilfsvorsprünge auf der Außenseite davon zum Entnehmen der Düse (B) aufweist.

6. Schnellkupplung mit Sicherheitssystem für Druckluftschläuche nach einem der Ansprüche 1-5, **dadurch gekennzeichnet, dass** die zweite Feder (98) um den Verbinderkörper (38) angeordnet ist, der eine Längsabmessung bei Anordnung von 175 ± 15% seiner Blocklänge oder Länge aufweist, wenn alle Spiralen verbunden sind.

7. Schnellkupplung mit Sicherheitssystem für Druckluftschläuche nach einem der Ansprüche 1-6, **dadurch gekennzeichnet, dass** die zweite Feder (98) auf einer ihrer Seiten (98c) der Einwirkung der vorstehenden Feder (88a), 88a') ausgesetzt ist und ihre Schubwirkung indirekt durch den Schieber (2) überträgt, außer in dem Fall, dass sich die Düse (B) in der Entlüftungs- oder Entnahmephase befindet.

8. Schnellkupplung mit Sicherheitssystem für Druckluftschläuche nach einem der Ansprüche 1-7, **dadurch gekennzeichnet, dass** die zweite Feder (98) die feste Abmessung ohne Schürze (78f) des Schnapprings (78) erreicht, die das Ende der Endkupplung (8) zeigt.

9. Schnellkupplung mit Sicherheitssystem für Druckluftschläuche nach einem der Ansprüche 1-8, **dadurch gekennzeichnet, dass** die Nadel (65, 66) der zweiten Federlast ausgesetzt ist, indem der Nadelring (88) entlang eines Schlitzes (67) geführt wird, der in einem Winkel zu der Längsachse des Verbinders (4) in dem Verbinderkörper (38) hergestellt ist.

10. Schnellkupplung mit Sicherheitssystem für Druckluftschläuche nach einem der Ansprüche 1-9, **dadurch gekennzeichnet, dass** während der Ansaugphase die Kugel (45, 46) die Verengung (12) der Düse (B) erreicht, bevor die Nadel in die Verengung (12) eingeführt wird und mit Bewegungsfreiheit innerhalb der Löcher (38j) mittels des Schiebers (2) durch den Hohlraum (88b, 88b') und einer schrägen Austrittsöffnung (47) verriegelt wird.

11. Schnellkupplung mit Sicherheitssystem für Druckluftschläuche nach einem der Ansprüche 1-10, **dadurch gekennzeichnet, dass** während der Ablassphase die Vorderseite (13) der Düse (B) von der Ringdichtung (36) und von dem Ventil (28) durch eine schmale Öffnung (13a) getrennt ist.

12. Schnellkupplung mit Sicherheitssystem für Druckluftschläuche nach Anspruch 11, **dadurch gekennzeichnet, dass** während der Ablassphase ein Teil der Luft, die durch die schmale Öffnung (13a) läuft, durch eine Anschlussöffnung (13c) und Rampen (67) das Innere des Schiebers (2) erreicht und eine Kraft auf den Schieber (2) in Richtung der Endkupplung (8) ausübt, die den Schieber (2) in die gleiche Richtung bewegt.

13. Schnellkupplung mit Sicherheitssystem für Druckluftschläuche nach einem der Ansprüche 11 oder 12, **dadurch gekennzeichnet, dass** während der Ablassphase ein Teil der Rückflussluft in dem Kanal (C), der durch die schmale Öffnung (13a) läuft, das des der Schiebers (2) durch eine Öffnung (47h) und durch Düsen (88j) erreicht, eine Kraft auf den Schieber (2) in Richtung der Endkupplung (8) ausübt und den Schieber (2) in die gleiche Richtung bewegt.

14. Schnellkupplung mit Sicherheitssystem für Druckluftschläuche nach einem der Ansprüche 11-13, **dadurch gekennzeichnet, dass** während der Ablassphase ein Teil der Rückflussluft im Kanal (C), die durch die schmale Öffnung (13a) strömt, über den Luftspalt (13h) den umgebenden Bereich erreicht.

15. Schnellkupplung mit Sicherheitssystem für Druckluftschläuche nach einem der Ansprüche 1-14, **dadurch gekennzeichnet, dass** während der Ablassphase die Kugel (45, 46) in einer schrägen Austrittsöffnung (47) parallel zur Achse (4) durch die Verengung (12) der Düse (B) durch eine Anschlagwand (38a) eingefangen ist, als ein Resultat der Kraft, die durch die Rückflussluft auf der Seite (13) der Düse (B) und durch den Schieber (2) ausgeübt wird.

16. Schnellkupplung mit Sicherheitssystem für Druckluftschläuche nach einem der Ansprüche 1-15, **dadurch gekennzeichnet, dass** der Nadelsperrmechanismus (65, 66) ein Zylinder ist, der sich über eine Rampe (67) bewegt, einen Neigungswinkel aufweist, der durch das Profil gebildet wird, das an der Verengung (12) der Düse (B), dem Flansch (10) und der Nadel (65, 66) befestigt ist, wobei der Reibungswinkel berücksichtigt wird.

## Revendications

1. Raccord rapide avec système de sécurité pour tubes pneumatiques comprenant un connecteur femelle (E) destiné à être couplé à une buse (B), ledit connecteur femelle (E) comprenant un élément pour joindre à une source (A) un accouplement de borne (8), un premier ressort (18), une soupape (28), un premier joint torique (26), un corps de connecteur (38), un joint annulaire (36), une bague de retenue (78), un second ressort (98), un mécanisme d'arrêt d'aiguille (65, 66), une bille (45, 46) et un couvercle (58), le raccord comprend en outre une bague d'aiguille élastique (88), qui incorpore
- au moins, un ressort saillant (88a, 88a') émergeant d'un bord qui est en contact avec la paroi intérieure (58a) du couvercle (58), créant une ouverture (88g) ;
- une cavité en forme d'ellipsoïde (88b, 88b') qui constitue un entrefer (88q) qui guide la bille (45, 46) vers la gorge (12) de la buse (B) lorsque cette dernière est en fonctionnement ;
- une aiguille (65, 66) guidée par un évidement à quatre coins (88c), ledit évidement (88c) présentant une profondeur supérieure au diamètre de l'aiguille (65, 66), le raccord **caractérisé en ce que** le couvercle (58) et la bague de retenue (78) avec le plateau (78f) forment une glissière (2) configurée pour se déplacer axialement sur l'accouplement de borne (8) et **en ce que** le raccord comprend, en outre, un second joint torique (6).

2. Raccord rapide avec système de sécurité pour tubes pneumatiques, selon la revendication 1, **caractérisé en ce que** la glissière (2) formée par la bague de retenue (78) et le couvercle (58) présente un bout de trépan lisse à une embouchure (58b) et incorpore une partie médiane (58z) formant un cylindre pneumatique qui fonctionne pendant la phase de retour et un évidement (58c) disposé à proximité d'un chanfrein d'assemblage (58h) qui loge la bride (78b) de la bague de retenue (78).

3. Raccord rapide avec système de sécurité pour tubes pneumatiques, selon l'une quelconque des revendications 1 à 2, **caractérisé en ce que** la bague de retenue (78), assemblée solidement sur la glissière (2) forme, avec une tige cylindrique (8c), l'accouplement de borne (8).

4. Raccord rapide avec système de sécurité pour tubes pneumatiques, selon l'une quelconque des revendications 1 à 3, **caractérisé en ce que** le plateau (78f) de la bague de retenue (78) est visible lorsque la glissière (2) est assemblée.

5. Raccord rapide avec système de sécurité pour tubes pneumatiques, selon l'une quelconque des revendications 1 à 4, **caractérisé en ce que** le couvercle (58) présente des protubérances auxiliaires à l'extérieur de celui-ci pour extraire la buse (B).

6. Raccord rapide avec système de sécurité pour tubes pneumatiques, selon l'une quelconque des revendications 1 à 5, **caractérisé en ce que** le second ressort (98) est disposé autour du corps de connecteur (38) avec une dimension longitudinale lors de l'assemblage de 175 ± 15 % de sa longueur ou longueur solide, lorsque toutes les spirales sont unies.

7. Raccord rapide avec système de sécurité pour tubes pneumatiques, selon l'une quelconque des revendications 1 à 6, **caractérisé en ce que** le second ressort (98) est soumis de l'un de ses côtés (98c) à l'action du ressort saillant (88a, 88a'), transmettant son action de poussée indirectement à travers la glissière (2), sauf lorsque la buse (B) se trouve dans la phase d'évacuation ou d'extraction.

8. Raccord rapide avec système de sécurité pour tubes pneumatiques, selon l'une quelconque des revendications 1 à 7, **caractérisé en ce que** le second ressort (98) atteint la dimension solide sans le plateau (78f) de la bague de retenue (78) montrant la fin de l'accouplement de borne (8).

9. Raccord rapide avec système de sécurité pour tubes pneumatiques, selon l'une quelconque des revendications 1 à 8, **caractérisé en ce que** l'aiguille (65, 66) soumise à la seconde charge à ressort, au moyen de la bague d'aiguille (88) est guidée le long d'une fente (67) réalisée selon un angle par rapport à l'axe longitudinal du connecteur (4), dans le corps du connecteur (38).

10. Raccord rapide avec système de sécurité pour tubes pneumatiques, selon l'une quelconque des revendications 1 à 9, **caractérisé en ce que,** pendant la phase d'admission, la bille (45, 46) atteint la gorge (12) de la buse (B) avant que l'aiguille ne soit insérée dans la gorge (12), étant verrouillée avec liberté de mouvement dans les trous (38j), au moyen de la glissière (2), à travers la cavité (88b, 88b') et un orifice oblique (47).

11. Raccord rapide avec système de sécurité pour tubes pneumatiques, selon l'une quelconque des revendications 1 à 10, **caractérisé en ce que,** pendant la phase de purge, la partie avant (13) de la buse (B) est séparée du joint annulaire (36) et de la soupape (28), par une ouverture étroite (13a).

12. Raccord rapide avec système de sécurité pour tubes pneumatiques, selon la revendication 11, **caractérisé en ce que,** pendant la phase de purge, une partie de l'air traversant l'ouverture étroite (13a) atteint, à travers un port (13c) et des rampes (67), l'intérieur de la glissière (2), exerçant une force sur la glissière (2) dans le sens de l'accouplement de borne (8), en déplaçant la glissière (2) dans le même sens.

13. Raccord rapide avec système de sécurité pour tubes pneumatiques, selon l'une quelconque des revendications 11 ou 12, **caractérisé en ce que,** pendant la phase de purge, une partie de l'air de retour dans le canal (C) qui traverse l'ouverture étroite (13a), atteint l'intérieur de la glissière (2), à travers une ouverture (47h) et à travers des buses (88j), exerçant une force sur la glissière (2) dans le sens de l'accouplement de borne (8), et en déplaçant la glissière (2) dans le même sens.

14. Raccord rapide avec système de sécurité pour tubes pneumatiques, selon l'une quelconque des revendications 11 à 13, **caractérisé en ce que,** pendant la phase de purge, une partie de l'air de retour dans le canal (C) qui traverse l'ouverture étroite (13a) atteint, via l'entrefer (13h), la zone environnante.

15. Raccord rapide avec système de sécurité pour tubes pneumatiques, selon l'une quelconque des revendications 1 à 14, **caractérisé en ce que,** pendant la phase de purge, la bille (45, 46) est piégée dans un orifice oblique (47), parallèle à l'axe (4), à travers la gorge (12) de la buse (B), à travers une paroi de butée (38a), en raison de la force exercée par l'air de retour sur le côté (13) de la buse (B) et par la glissière (2).

16. Raccord rapide avec système de sécurité pour tubes pneumatiques, selon l'une quelconque des revendications 1 à 15, **caractérisé en ce que** le mécanisme d'arrêt d'aiguille (65, 66) est un cylindre qui se déplace sur une rampe (67) ayant un angle de pente formé par le profil attaché à la gorge (12) de la buse (B), la bride (10) et l'aiguille (65, 66), en tenant compte de l'angle de frottement.
